# EUROPÄISCHE PATENTSCHRIFT

(11) **EP 0 671 441 B1**
(45) Veröffentlichungstag und Bekanntmachung des Hinweises auf die Patenterteilung: **21.10.1998**
(21) Anmeldenummer: 95102325.8
(22) Anmeldetag: 20.02.1995
(51) Int. Cl.: C09B 43/16, C09B 62/09, C09D 11/00

(54) **Disazofarbstoffe**
Disazo dyes
Colorants disazoiques

(30) Priorität: 03.03.1994 DE 4406950
(43) Veröffentlichungstag der Anmeldung: 13.09.1995
(73) Patentinhaber: BAYER AG, 51368 Leverkusen (DE)
(72) Erfinder: Renner, Gerd-Friedrich, Dr., D-51515 Kürten (DE); Wild, Peter, Dr., D-51519 Odenthal (DE); Hassenrück, Karin, Dr., D-40468 Düsseldorf (DE)

(56) Entgegenhaltungen:
- EP-A- 0 017 831
- EP-A- 0 357 560

## Beschreibung

Die Erfindung betrifft anionische Disazoverbindungen mit einer Triazinylaminobrücke und ihre Salze, ein Verfahren zu ihrer Herstellung, ihren Einsatz in Färbe- und Druckverfahren als Direktfarbstoffe sowie Färbepräparationen, die diese Farbstoffe enthalten.

Aus EP-A 357 560, DE-A 2 851 787 und JP-A 60 243 174 sind bereits Disazofarbstoffe mit einer Triazinylaminobrücke bekannt, die es jedoch noch zu verbessern galt.

Auch die EP-A-348 344 beschreibt ähnliche Disazofarbstoffe.

Es wurden nun Verbindungen der Formel I gefunden, 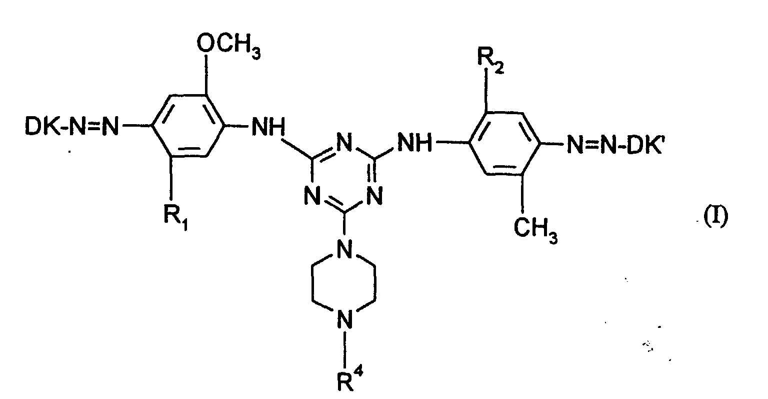 worin DK einen Rest der Formel 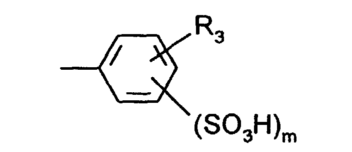 mit m = 1 oder 2
und DK' einen Rest der Formel 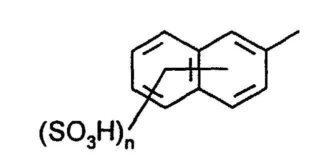 mit n = 1 oder 2
bedeutet,
- R₁: für Wasserstoff oder gegebenenfalls substituiertes C₁-C₄-Alkoxy, C₁-C₄-Alkyl, insbesondere Methyl, Ethyl oder Methoxy,
- R₂: für Wasserstoff, gegebenenfalls substituiertes C₁-C₄-Alkyl oder C₁-C₄-Alkoxy, insbesondere Methyl oder Methoxy,
- R₃: für Wasserstoff, gegebenenfalls substituiertes C₁-C₄-Alkyl, C₁-C₄-Alkoxy oder C₁-C₄-Acylamino, insbesondere Methyl, Methoxy und Acetylamino,
- R₄: für gegebenenfalls substituiertes C₁-C₄-Alkyl steht.

Als mögliche Substituenten der Alkyl- oder Alkoxy-Reste in der Bedeutung von R₁ bis R₃ können beispielsweise Hydroxygruppen genannt werden.

Darüberhinaus können die Alkylreste auch mit C₁-C₄-Alkoxyresten substituiert sein.

In einer bevorzugten Ausführungsform sind die Alkyl- bzw. Alkoxyreste von R₁ bis R₃ jedoch unsubstituiert.

Bevorzugt sind Farbstoffe der Formel (I), worin
- R₄: ein unsubstituiertes oder durch Hydroxy, Amino, einen gegebenenfalls mit C₁-C₄-Alkyl alkylierten Poly-C₁-C₄-alkylether oder Hydroxy-C₁-C₄-alkoxy, insbesondere β-Hydroxyethoxy, substituiertes C₁-C₄-Alkyl bedeutet.

In dem für DK' definierten 2-Naphtylrest befinden sich die Sulfogruppen bevorzugt in den Positionen 4, 5, 6, 7 und 8.

Bevorzugt sind Verbindungen der Formel (I), die der Formel (II) entsprechen 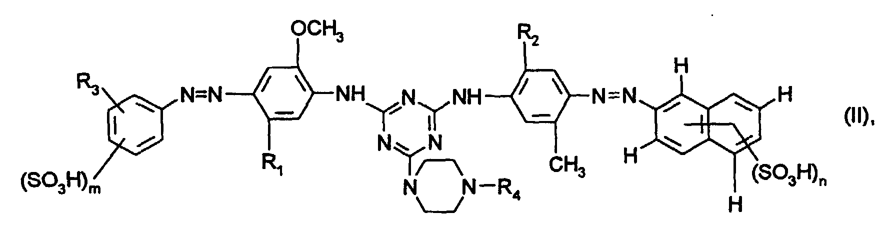 worin R₄ für Methyl, Ethyl, 2-Hydroxyethyl oder 2-Aminoethyl steht und m + n = 3 ist und R₁, R₂ und R₃ die oben genannte Bedeutung besitzen.

Besonders bevorzugt sind Verbindungen der Formel (I), die der Formel (III) entsprechen. 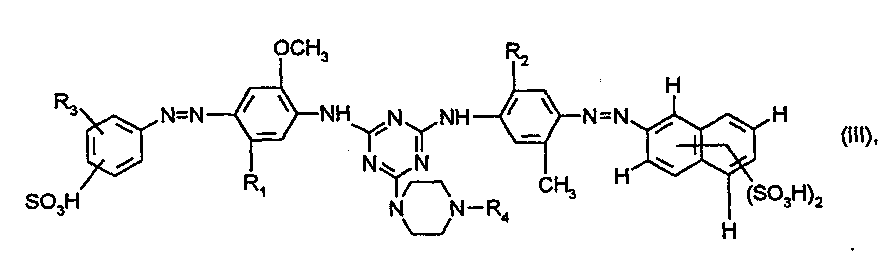 worin
R⁴ für Methyl, Ethyl, 2-Hydroxyethyl oder 2-Aminoethyl und die Sulfogruppen im Naphthylrest in den Positionen 4,8 oder 6,8 stehen und R¹, R² und R³ die obige Bedeutung haben.

In einer bevorzugten Ausführungsform gilt für R₄, daß sich in einer hydroxy- oder hydroxyalkoxy-substituierten Alkylgruppe, die an das N-Atom gebunden ist, die Hydroxy- oder Hydroxyalkoxygruppe bevorzugt nicht an dem N-Atom benachbarten C-Atom befindet. Ebenso befindet sich die Hydroxygruppe in einer Hydroxyalkoxygruppe bevorzugt nicht an einem dem O-Atom benachbarten C-Atom.

In einer ganz besonders bevorzugten Ausführungsform bedeuten
- R₁: Wasserstoff, Methyl, Ethyl oder Methoxy,
- R₂: Wasserstoff, Methyl oder Methoxy und
- R₃: Wasserstoff, Methyl oder Methoxy.

Die Verbindungen der Formel I können als freie Säure, als Salz von Alkalimetallen wie Lithium, Natrium oder Kalium, oder als unsubstituiertes oder substituiertes Ammoniumsalz vorliegen, wobei insbesondere auch gemischte Salze möglich sind. Im Fall eines substituierten Ammoniums als Kation kann sich dieses von einem primären, sekundären oder tertiären Amin ableiten, beispielsweise sind die folgenden Amine geeignet: Mono-, Di- oder Trimethyl-, -äthyl-, -propyl- oder - butyl-amin; Mono-, Di- oder Tri-äthanol-, -propanol- oder -isopropanol-amin; N-Methyl-N,N-di(hydroxyäthylamin, N-Methyl-N,N-di(hydroxyäthyl)amin, N-Äthyl-N-hydroxy-äthoxyäthylpiperazin; Äthylendiamin, Hexamethylendiamin; Dimethylaminopropylamin, Diäthylaminopropylamin, Diäthylenglykolamin und 3-Methoxypropylamin. Als Amine sind auch Polyglykolamine geeignet, die beispielsweise durch Umsetzung von Ammoniak, Alkyl- oder Hydroxyalkylamin mit Alkylenoxiden erhalten werden können.

Als substituiertes Ammoniumion-Kation kann auch ein quaternäres Ammoniumion vorliegen, das sich von Ammoniumverbindungen ableitet, die bevorzugt ein oder zwei quaternäre Ammoniumionen enthalten; beispielsweise sind zu nennen: Tetramethyl-, Tetraäthyl-, Trimethyläthyl-, Dimethyl-di(2-hydroxypropyl)-, Trimethylhydroxyäthyl-, Tetrakis(hydroxyäthyl)- und Trimethylbenzyl-ammoniumhydroxid.

Die Erfindung betrifft weiterhin ein Verfahren zur Herstellung der Verbindungen der Formel (I), das dadurch gekennzeichnet ist, daß man eine Verbindung der Formel (IV), 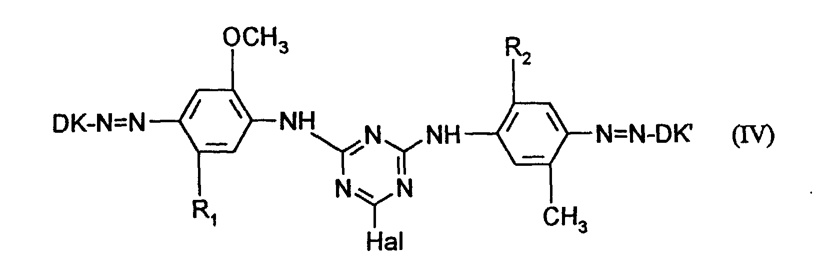 worin DK, DK', R₁ und R₂ wie oben definiert sind und Hal für Halogen, insbesondere F, Cl und Br und ganz besonders bevorzugt für F und Cl, steht, mit einem Piperazin der Formel (V) 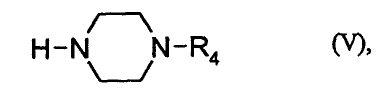 worin R₄ wie oben definiert ist, umsetzt.

Diese Kondensation wird nach an sich bekannten Methoden durchgeführt und erfolgt unter den für den Austausch des dritten Halogenatoms am Triazinring üblichen Bedingungen.

Bevorzugt wird die Kondensation in wäßrigem Medium bei einem pH-Wert von 7-12 und einer Temperatur von 60-100°C durchgeführt.

Die als Ausgangsmaterial eingesetzten Verbindungen der Formel (IV) können erhalten werden, indem man Cyanurhalogenid schrittweise mit den entsprechenden Monoazoverbindungen umsetzt, wobei letztere wiederum durch Diazotierung und Kupplung entsprechender Kupplungs- und Diazokomponenten erhalten werden können.

Auch die Reaktionsbedingungen beim Ersatz des ersten und zweiten Halogenatoms am Triazin sind die üblicherweise verwendeten.

Sowohl die dabei verwendeten Monoazoverbindungen als auch die Piperazine der Formel (V) stellen an sich bekannte Verbindungen dar oder können analog zu an sich bekannten Verfahren erhalten werden.
Die Erfindung betrifft weiterhin Zwischenprodukte der Formel (IV), worin die Substituenten die oben genannten Bedeutungen haben.

Die erfindungsgemäßen Farbstoffe der Formel (I) können unterschiedlichen Verwendungsarten zugeführt werden. So eignen sie sich beispielsweise zum Färben und Bedrucken von Textilfasern als auch zum Färben und Bedrucken von Papier und für den Einsatz in Tinten.

So dienen die erfindungsgemäßen Verbindungen in Form ihrer wasserlöslichen Salze beispielsweise zum Färben oder Bedrucken von hydroxygruppen- oder stickstoffhaltigen organischen Substraten, wie zum Färben oder Bedrucken von Fasern, Fäden oder daraus hergestellten Textilien, die aus natürlichen oder synthetischen Polyamiden oder aus natürlichem oder regeneriertem Cellulosematerial, z. B. Baumwolle, bestehen oder diese enthalten, nach an sich bekannten Methoden; Baumwolle wird dabei vorzugsweise nach dem Ausziehverfahren gefärbt, beispielsweise aus langer oder kurzer Flotte und bei Raum- bis Kochtemperatur.

Das Bedrucken erfolgt beispielsweise durch Imprägnieren mit einer Druckpaste, welche nach an sich bekannter Methode zusammengestellt wird.

Eine bevorzugte Verwendung finden die erfindungsgemäßen Farbstoffe der Formel (I) bei der Herstellung von Tinten nach an sich bekannter Methode. Insbesondere eignen sich die Verbindungen der Formel (I) jedoch zum Färben oder Bedrucken von Papier, z. B. für die Herstellung von in der Masse gefärbtem, geleimtem oder ungeleimtem Papier. Sie können aber auch zum Färben von Papier nach dem Tauchverfahren oder in der Leimpresse, verwendet werden. Das Färben und Bedrucken von Papier erfolgt nach bekannten Methoden.

Die jeweils erhaltenen Färbungen und Drucke, insbesondere die auf Papier, zeigen guten Gebrauchsechtheiten.

Die Verbindungen der Formel (I) können auch in Form von Färbepräparaten und Drucktinten, z.B. für den Ink-Jet-Druck (beispielsweise nach dem Bubble-jet oder Piezo-Verfahren), eingesetzt werden. Diese Anwendungsform ist insbesondere beim Färben von Papier bevorzugt. Die Verarbeitung in stabile flüssige, vorzugsweise wäßrige, konzentrierte Färbepräparate kann auf allgemein bekannte Weise erfolgen, vorteilhaft durch Lösen in geeigneten Lösungsmitteln, gegebenenfalls unter Zugabe eines Hilfsmittels, z.B. einer hydrotropen Verbindung. Von besonderem Vorteil ist der Umstand, daß man die Herstellung solcher stabilen, wäßrig-konzentrierten Präparationen aus der Syntheselösung des Farbstoffs selbst, d.h. ohne Zwischenisolierung des Farbstoffs durchführen kann.

Geeignete hydrotrope Hilfsmittel sind beispielsweise niedermolekulare Amide, Laktone, Alkohole, Glykole oder Polyole, niedermolekulare Äther oder Oxalkylierungsprodukte sowie Nitrile oder Ester; in Betracht kommen dabei bevorzugt Methanol, Äthanol, Propanol; 1,5-Pentandiol, Äthylen-, Propylen-, Diäthylen-, Thiodiäthylen- und Dipropylen-glykol; Butandiol; β-Hydroxypropionitril, Pentamethylenglykol, Äthylenglykolmonoäthyl- und propyläther; Äthylendiglykolmonoäthyläther, Triäthylenglykolmonobutyläther, Butylpolyglykol, Formamid, Dimethylformamid, Pyrrolidon, N-Methylpyrrolidon, Glykolacetat, Butyrolakton, Harnstoff und ε-Caprolactam.

Hydrotrope Verbindungen sind z. B. beschrieben bei H. Rath und S. Müller, Melliand Textilberichte 40, 787 (1959) oder bei E. H. Darwalle in K. Venkataraman, The Chemistry of Synthetic Dyes, Vol. VIII, S. 86 - 92 (1974).

Durch den zusätzlichen Gehalt von bis zu 20 Gew.-%, insbesondere 5 bis 20 Gew.-%, an einer hydrotropen Verbindung läßt sich die Lagerstabilität der Farbstoffzubereitung bzw. die Löslichkeit des eingesetzten Farbstoffes weiter verbessern.

Die nach dem erfindungsgemäßen Herstellungsverfahren erhaltenen Verbindungen der Formel (I) können auch in Form ihrer Synthese-Lösung ihrer weiteren Verwendung zugeführt werden; die Lösung kann aber auch durch Sprühtrocknung in eine feste Farbstoffpräparation überführt werden. Weiterhin ist auch die für Farbstoffe übliche Isolierungsmethode, Aussalzen aus der Lösung, Abfiltrieren und Trocknen geeignet.

Die Art der in einer Verbindung der Formel I den Sulfogruppen zugeordneten Kationen kann verfahrensmäßig in verschiedener Weise beeinflußt werden; es handelt sich dabei um an sich bekannte Methoden. Insbesondere können durch gezielte Steuerung des verwendeten Herstellungsverfahrens gemischte Salze erhalten werden.

Die Färbungen und Drucke auf Papier zeigen gute Lichtechtheit, nach längerem Belichten ändert sich die Nuance Ton-in-Ton. Sie sind sehr gut naßecht gegen Wasser, Milch, Fruchtsäfte, gesüßte Mineralwässer und Tonicwasser, und sie besitzen zudem gute Alkoholechtheit. Die Farbstoffe haben eine hohe Substantivität, d.h. sie ziehen praktisch quantitativ auf und zeigen dabei ein gutes Aufbauvermögen; sie können der Papiermasse direkt, d.h. ohne vorheriges Auflösen, als Trockenpulver oder Granulat zugesetzt werden, ohne daß eine Minderung in der Brillanz oder Verminderung in der Farbausbeute eintritt. Vorteilhaft werden jedoch Lösungen der Farbstoffe wie oben angeführt eingesetzt, die stabil, von niederer Viskosität und dadurch sehr gut dosierbar sind.

Die Herstellung der Papierfärbungen kann mit den beschriebenen Farbstoffen auch in Weichwasser erfolgen. Zudem können Faserstoffe, die Holzschliff enthalten, in guter Qualität gefärbt werden.

Die nachfolgenden Beispiele dienen zur Illustration der Erfindung. Sofern nichts anderes angegeben ist, bedeuten in den Beispielen Teile Gewichts- oder Volumenteile und Prozente Gewichts- oder Volumprozente; die Temperaturen sind in Celsiusgraden angegeben.

### Beispiele

### Beispiel 1

112,4 g (0,2 mol) des Kupplungsproduktes (74,9%ig) aus 2-Amino-naphthalin-4,8-disulfonsäure und m-Toluidin werden in 500 ml Wasser verrührt und mit 18 ml wäßr. Natronlauge (40%ig) bei pH 8,5 bei Raumtemperatur gelöst. Anschließend wird auf 0 - 5°C gekühlt und 40,6 g (0,21 mol) Cyanurchlorid portionsweise zugegeben. Ein pH von 8 wird während der Reaktion über 6 Stunden mit 10%iger Natronlauge gehalten. Anschließend werden bei Raumtemperatur 121,5 g (0,2 mol) des Kupplungsproduktes (50,5%ig) aus m-Sulfanilsäure und o-Anisidin in 500 ml Wasser eingetragen. Der pH wird ebenfalls bei 8 gehalten. Innerhalb von 30 Minuten wird nach Ende der Zudosierung auf 60 bis 70°C erwärmt und weitere 6 Stunden bei dieser Temperatur gerührt.

Der Farbstoff, der in Form der freien Säure der Formel 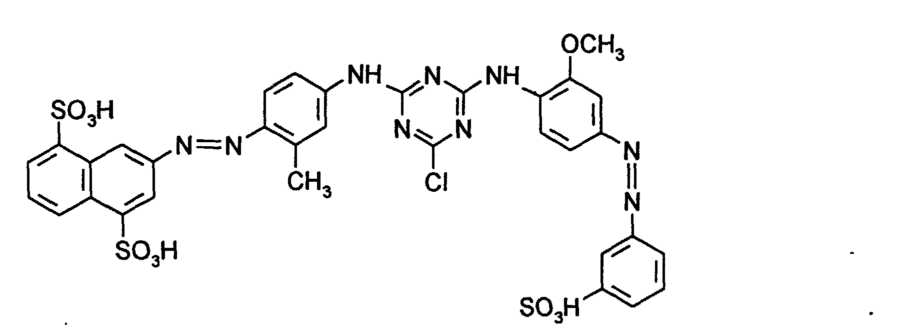 entspricht, fällt aus und kann abgesaugt werden. Die weitere Umsetzung kann aber auch ohne Zwischenisolierung erfolgen.

### Beispiel 2

Zu der Reaktionsmischung aus Beispiel 1 werden 45,2 g (0,4 mol) Ethylpiperazin zugegeben und auf 100°C erhitzt. Damit der pH-Wert 8,5 nicht unterschritten wird, werden weitere 39,6 g (0,35 mol) Ethylpiperazin nachdosiert. Nach 5 Stunden kann auf 80°C abgekühlt werden. Mit Salzsäure wird auf pH 6 gestellt und auf Raumtemperatur abgekühlt. Der Farbstoff kristallisiert aus (bzw. kann ausgesalzen werden) und wird nach dem Absaugen im Vakuum bei 60°C getrocknet. Der Farbstoff entspricht in Form der freien Säure der Formel

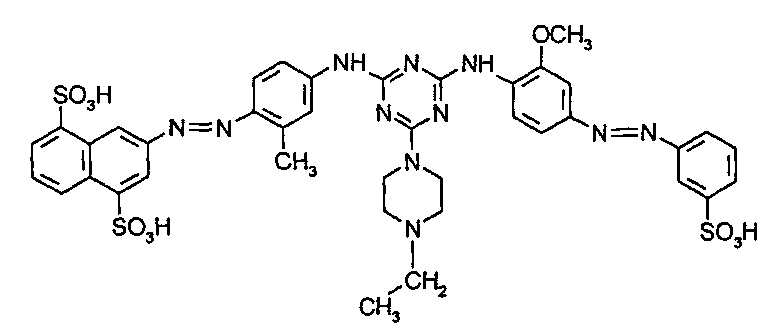

### Beispiel 3

Zu der Reaktionsmischung aus Beispiel 1 werden 51,2 g (0,4 mol) Hydroxyethylpiperazin zugegeben und auf 100°C erhitzt. Damit der pH-Wert 8,5 nicht unterschritten wird, werden weitere 44,8 g (0,35 mol) Hydroxyethylpiperazin nachdosiert. Nach 5 Stunden kann auf 80°C abgekühlt werden. Mit Salzsäure wird auf pH 6 gestellt und auf Raumtemperatur abgekühlt. Der Farbstoff kristallisiert aus (bzw. kann ausgesalzen werden) und wird nach dem Absaugen im Vakuum bei 60°C getrocknet. Der Farbstoff entspricht in Form der freien Säure der Formel

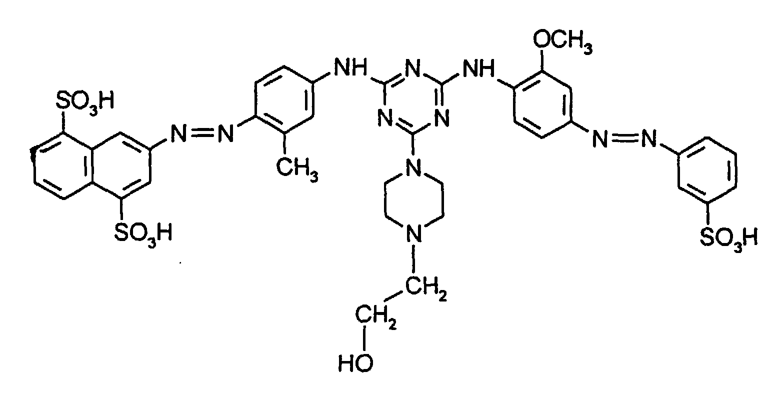

### Beispiel 4

112,4 g (0,2 mol) des Kupplungsproduktes (74,9%ig) aus 2-Amino-naphthalin-6,8-disulfonsäure und m-Toluidin werden in 500 ml Wasser verrührt und mit 18 ml wäßriger Natronlauge (40%ig) bei pH 8,5 bei Raumtemperatur gelöst. Anschließend wird auf 0 bis 5°C gekühlt und 40,6 g Cyanurchlorid (0,21 mol) portionsweise zugegeben. Ein pH von 8 wird während der Reaktion über 6 Stunden mit 10%iger Natronlauge gehalten. Anschließend werden bei Raumtemperatur 121,5 g (0,2 mol) des Kupplungsproduktes (50,5%ig) aus m-Sulfanilsäure und o-Anisidin in 500 ml Wasser eingetragen. Der pH wird ebenfalls bei 8 gehalten. Innerhalb von 30 Minuten wird nach Ende der Zudosierung auf 60 bis 70°C erwärmt und weitere 6 Stunden bei dieser Temperatur gerührt.

An dieser Stelle kann das Reaktionsprodukt isoliert werden, indem auf Raumtemperatur abgekühlt wird. Das Produkt fällt aus und kann abgesaugt werden. Die weitere Umsetzung kann aber auch wie weiter beschrieben ohne Isolation erfolgen.

### Beispiel 5

Zu der Reaktionsmischung aus Beispiel 4 werden 45,2 g (0,4 mol) Ethylpiperazin zugegeben und auf 100°C erhitzt. Damit der pH-Wert 8,5 nicht unterschritten wird, werden weitere 39,6 g (0,35 mol) Ethylpiperazin nachdosiert. Nach 5 Stunden kann auf 80°C abgekühlt werden. Mit Salzsäure wird auf pH 6 gestellt und auf Raumtemperatur abgekühlt. Der Farbstoff kristallisiert aus (bzw. kann ausgesalzen werden) und wird nach dem Absaugen im Vakuum bei 60°C getrocknet. Der Farbstoff entspricht in Form der freien Säure der Formel

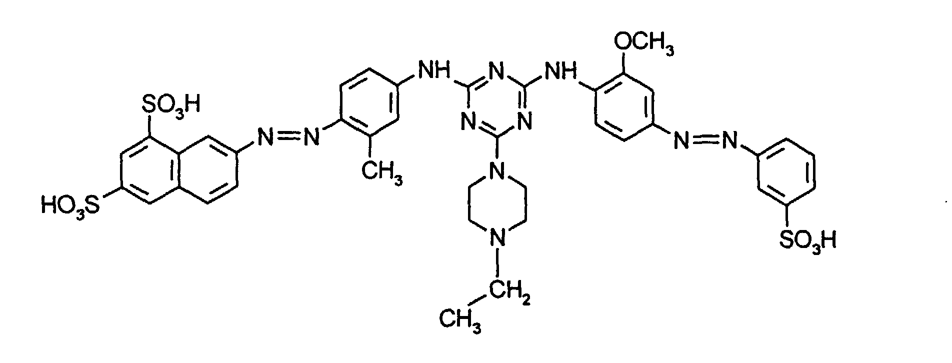

### Beispiel 6

Zu der Reaktionsmischung aus Beispiel 4 werden 51,2 g (0,4 mol) β-Hydroxyethylpiperazin zugegeben und auf 100°C erhitzt. Damit der pH-Wert 8,5 nicht unterschritten wird, werden weitere 44,8 g (0,35 mol) Hydroxyethylpiperazin nachdosiert. Nach 5 Stunden kann auf 80°C abgekühlt werden. Mit Salzsäure wird auf pH 6 gestellt und auf Raumtemperatur abgekühlt. Der Farbstoff kristallisiert aus (bzw. kann ausgesalzen werden) und wird nach dem Absaugen im Vakuum bei 60°C getrocknet. Der Farbstoff entspricht in Form der freien Säure der Formel

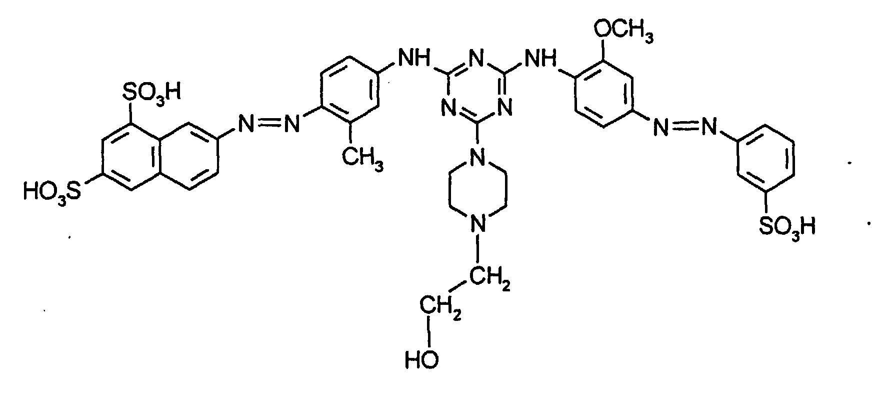

## Patentansprüche

1. Verbindungen der Formel (I) 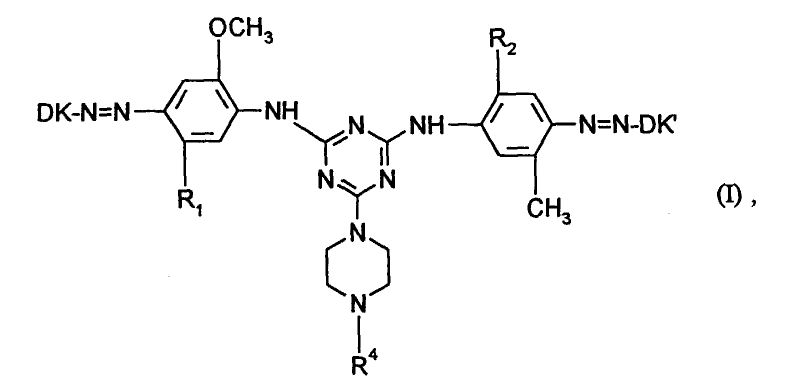 worin DK einen Rest der Formel 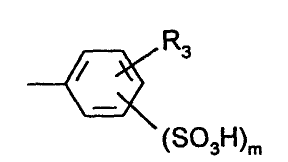 mit m = 1 oder 2
und DK' einen Rest der Formel 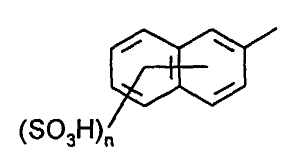 mit n = 1 oder 2
bedeutet,
R₁ für Wasserstoff oder gegebenenfalls substituiertes C₁-C₄-Alkoxy, C₁-C₄-Alkyl, insbesondere Methyl, Ethyl oder Methoxy,
R₂ für Wasserstoff, gegebenenfalls substituiertes C₁-C₄-Alkyl oder C₁-C₄-Alkoxy, insbesondere Methyl oder Methoxy,
R₃ für Wasserstoff, für gegebenenfalls substituiertes C₁-C₄-Alkyl, C₁-C₄-Alkoxy oder C₁-C₄-Acylamino, insbesondere Methyl, Methoxy und Acetylamino,
R₄ für gegebenenfalls substituiertes C₁-C₄-Alkyl steht.

2. Verbindungen gemäß Anspruch 1, worin
R₄ ein unsubstituiertes oder durch Hydroxy, Amino, einen gegebenenfalls mit C₁-C₄-Alkyl alkylierten Poly-C₁-C₄-alkylether oder Hydroxy-C₁-C₄-alkoxy, insbesondere β-Hydroxyethoxy, substituiertes C₁-C₄-Alkyl bedeutet.

3. Verbindungen gemäß Anspruch 1 der Formel (II) 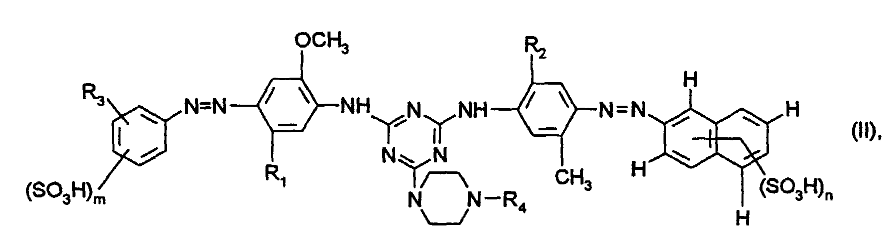 worin R₄ für Methyl, Ethyl, 2-Hydroxyethyl oder 2-Aminoethyl steht und m + n = 3 ist.

4. Verbindungen gemäß Anspruch 1 der Formel (III) 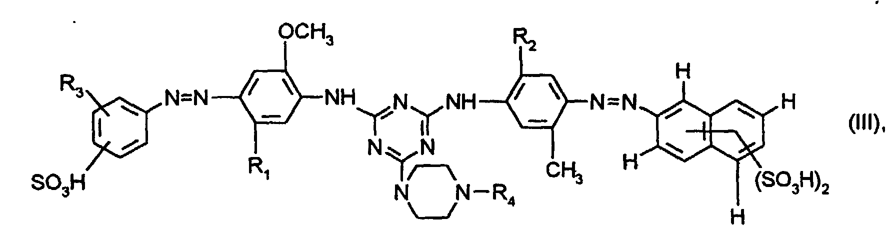 worin
R₄ für Methyl, Ethyl, 2-Hydroxyethyl oder 2-Aminoethyl und die Sulfogruppen im Naphthylrest in den Positionen 4,8 oder 6,8 stehen.

5. Verbindungen der Formel (I) gemäß Anspruch 1, worin
R₁ für Wasserstoff, Methyl, Ethyl oder Methoxy,
R₂ für Wasserstoff, Methyl oder Methoxy und
R₃ für Wasserstoff, Methyl oder Methoxy steht.

6. Verfahren zur Herstellung von Verbindungen gemäß Anspruch 1, das dadurch gekennzeichnet ist, daß man eine Verbindung der Formel (IV), 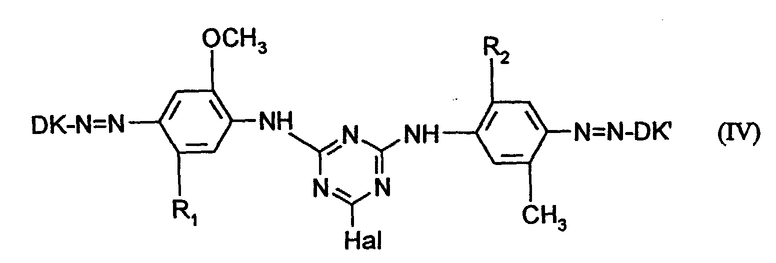 worin DK, DK', R₁ und R₂ die Bedeutung gemäß Anspruch 1 besitzen und Hal für Halogen, insbesondere F, Cl und Br, steht, mit einem Piperazin der Formel (V) 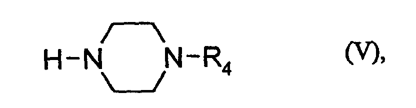 worin R₄ die Bedeutung gemäß Anspruch 1 hat, umsetzt.

7. Verbindungen der Formel (IV) 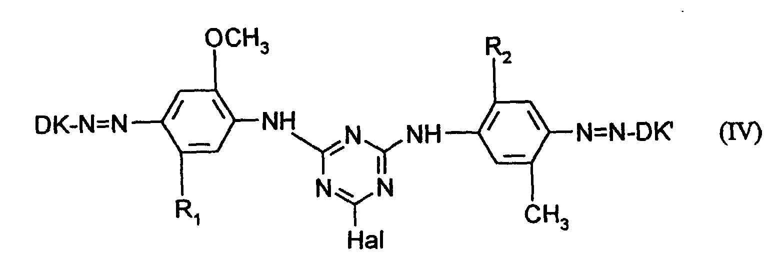 worin DK, DK', R₁ und R₂ die Bedeutung gemäß Anspruch 1 besitzen und Hal für Halogen, insbesondere für F, Cl und Br, steht.

8. Verwendung der Farbstoffe gemäß Anspruch 1 zum Färben oder Bedrucken von hydroxygruppen- oder stickstoffhaltigen organischen Substraten.

9. Verwendung der Farbstoffe gemäß Anspruch 1 zum Färben und Bedrucken von Papier.

10. Farbstoffpräparationen, insbesondere wäßrige Drucktinten, enthaltend mindestens einen Farbstoff gemäß Anspruch 1.

## Claims

1. Compounds of the formula (I) 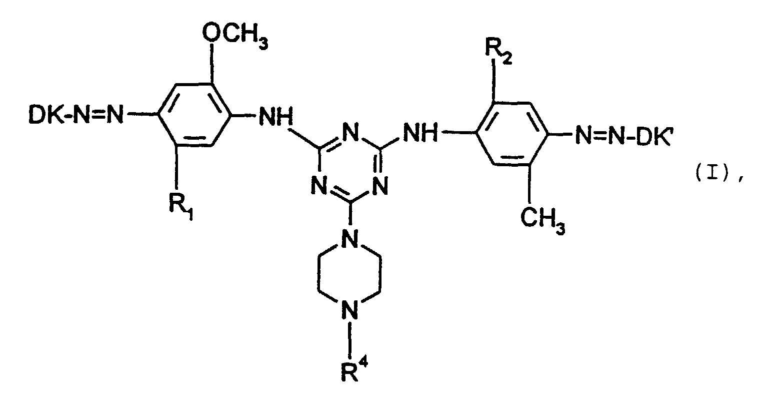 in which DK denotes a radical of the formula 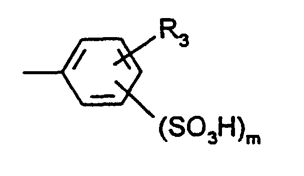 where m is 1 or 2
and DK' denotes a radical of the formula 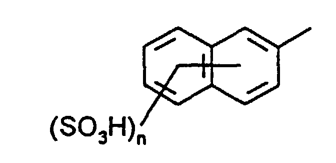 where n is 1 or 2
R₁ represents hydrogen or substituted or unsubstituted C₁-C₄-alkoxy, C₁-C₄-alkyl, in particular methyl, ethyl or methoxy,
R₂ represents hydrogen, substituted or unsubstituted C₁-C₄-alkyl or C₁-C₄-alkoxy, in particular methyl or methoxy,
R₃ represents hydrogen, substituted or unsubstituted C₁-C₄-alkyl, C₁-C₄-alkoxy or C₁-C₄-acylamino, in particular methyl, methoxy and acetylamino,
R₄ represents substituted or unsubstituted C₁-C₄-alkyl.

2. Compounds according to Claim 1, in which
R₄ denotes C₁-C₄-alkyl which is unsubstituted or substituted by hydroxyl, amino, a poly-C₁-C₄-alkyl ether which, if desired, is alkylated by C₁-C₄-alkyl or is substituted by hydroxy-C₁-C₄-alkoxy, in particular β-hydroxyethoxy.

3. Compounds according to Claim 1 of the formula (II) 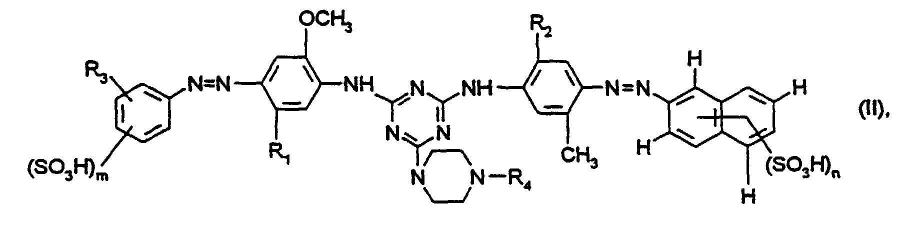 in which R₄ represents methyl, ethyl, 2-hydroxyethyl or 2-aminoethyl and m + n is 3.

4. Compounds according to Claim 1 of the formula (III) 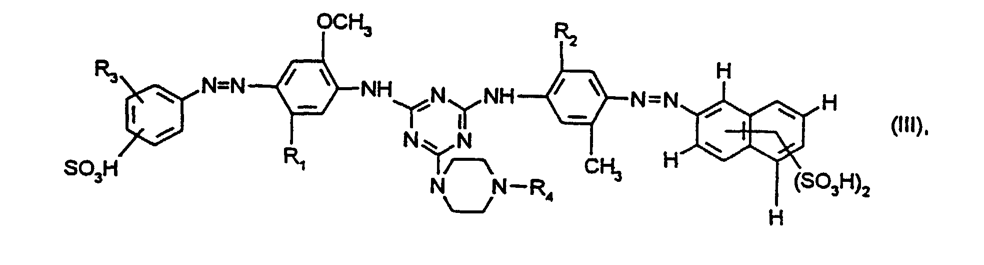 in which
R₄ represents methyl, ethyl, 2-hydroxyethyl or 2-aminoethyl and the sulpho groups in the naphthyl radical are in the 4, 8 or 6, 8 positions.

5. Compounds of the formula (I) according to Claim 1, in which
R₁ represents hydrogen, methyl, ethyl or methoxy,
R₂ represents hydrogen, methyl or methoxy and
R₃ represents hydrogen, methyl or methoxy.

6. Process for preparing compounds according to Claim 1, characterized in that a compound of the formula (IV), 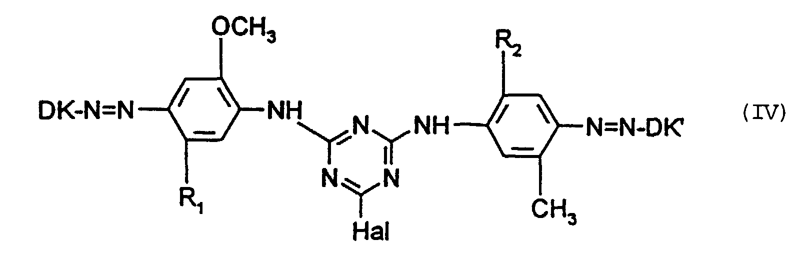 in which DK, DK', R₁ and R₂ have the meaning according to Claim 1 and Hal represents halogen, in particular F, Cl and Br, is reacted with a piperazine of the formula (V) 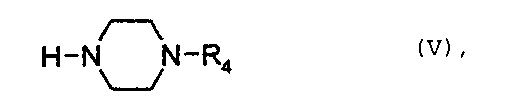 in which R₄ has the meaning according to Claim 1.

7. Compounds of the formula (IV) 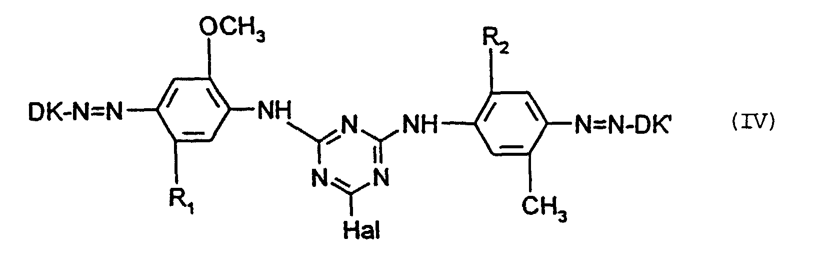 in which DK, DK', R₁ and R₂ have the meaning according to Claim 1 and Hal represents halogen, in particular F, Cl and Br.

8. Use of the dyestuffs according to Claim 1 for dyeing or printing hydroxyl- or nitrogen-containing organic substrates.

9. Use of the dyestuffs according to Claim 1 for colouring and printing paper.

10. Dyestuff preparations, in particular aqueous printing inks, containing at least one dyestuff according to Claim 1.

## Revendications

1. Composés de formule (I) 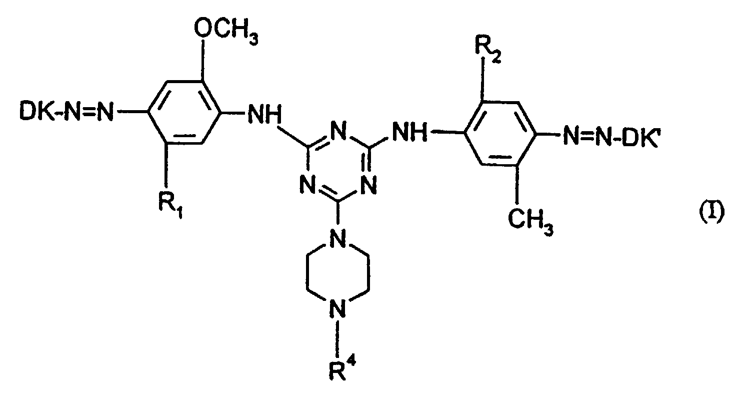 dans laquelle DK représente un reste de formule 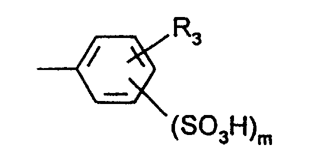 où m = 1 ou 2
et DK' représente un reste de formule 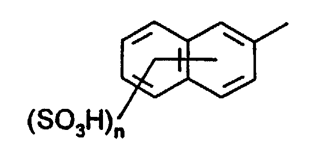 où n = 1 ou 2
R₁ représente un atome d'hydrogène ou un groupe alcoxy en C₁-C₄ ou alkyle en C₁-C₄ éventuellement substitué, en particulier méthyle, éthyle ou méthoxy,
R₂ représente un atome d'hydrogène ou un groupe alkyle en C₁-C₄ ou alcoxy en C₁-C₄ éventuellement substitué, en particulier méthyle ou méthoxy,
R₃ représente un atome d'hydrogène ou un groupe alkyle en C₁-C₄, alcoxy en C₁-C₄ ou acylamino en C₁-C₄ éventuellement substitué, en particulier méthyle, méthoxy et acétylamino,
R₄ représente un groupe alkyle en C₁-C₄ éventuellement substitué.

2. Composés selon la revendication 1, dans laquelle
R₄ représente un groupe alkyle en C₁-C₄ non substitué ou substitué par hydroxy, amino, un poly(éther d'alkyle en C₁-C₄) ou hydroxyalcoxy en C₁-C₄ éventuellement alkylé par alkyle en C₁-C₄, en particulier β-hydroxyéthoxy.

3. Composés selon la revendication 1, de formule (II) 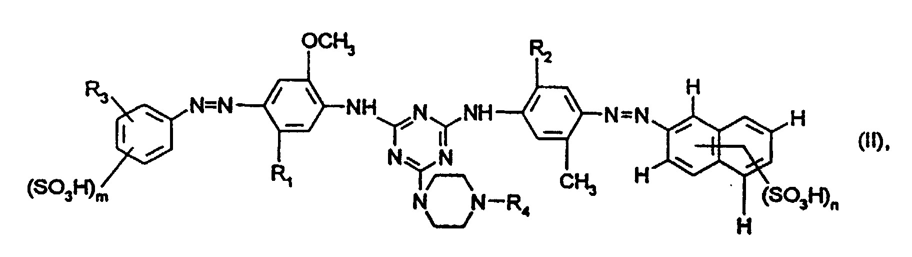 dans laquelle R₄ représente un groupe méthyle, éthyle, 2-hydroxyéthyle ou 2-aminoéthyle et m + n = 3.

4. Composés selon la revendication 1, de formule (III): 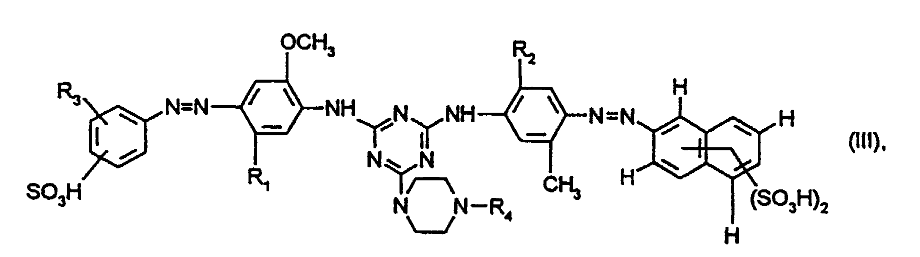 dans laquelle R₄ représente un groupe méthyle, éthyle, 2-hydroxyéthyle ou 2-aminoéthyle et les groupes sulfo dans le reste naphtyle sont en position 4,8 ou 6,8.

5. Composés de formule (I) selon la revendication 1, dans lesquels
R₁ représente un atome d'hydrogène ou un groupe méthyle, éthyle ou méthoxy,
R₂ représente un atome d'hydrogène ou un groupe méthyle ou méthoxy, et
R₃ représente un atome d'hydrogène ou un groupe méthyle ou méthoxy.

6. Procédé de préparation de composés selon la revendication 1, qui est caractérisé en ce que l'on fait réagir un composé de formule (IV) 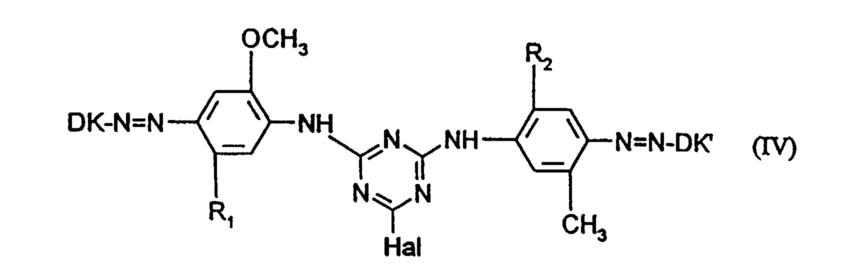 dans laquelle DK, DK', R₁ et R₂ ont la définition indiquée dans la revendication 1 et Hal représente un halogène, en particulier F, Cl et Br, avec une pipérazine de formule (V) 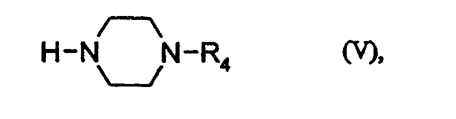 dans laquelle R₄ a la définition indiquée dans la revendication 1.

7. Composés de formule (IV) 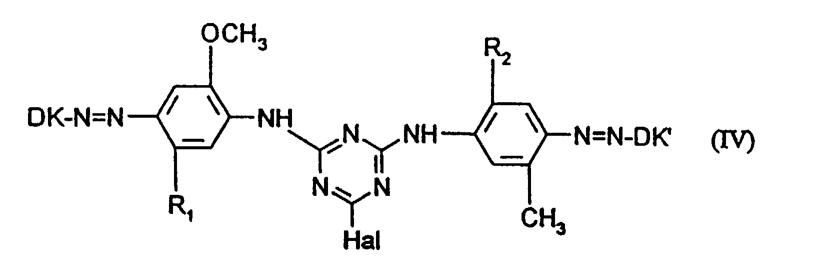 dans laquelle DK, DK', R₁ et R₂ ont la définition indiquée dans la revendication 1 et Hal représente un halogène, en particulier F, Cl et Br.

8. Utilisation des colorants selon la revendication 1 pour la teinture et l'impression de substrats organiques contenant des groupes hydroxy ou de l'azote.

9. Utilisation des colorants selon la revendication 1 pour la teinture et l'impression de papier.

10. Préparations de colorants, en particulier des encres d'impression aqueuses, contenant au moins un colorant selon la revendication 1.
